# EUROPEAN PATENT SPECIFICATION

(11) **EP 4 577 914 B1**
(45) Date of publication and mention of the grant of the patent: **29.07.2026**
(21) Application number: 22786338.8
(22) Date of filing: 15.09.2022
(51) Int. Cl.: G06F 13/16, H04L 1/18, G06F 13/28, H04L 47/62, H04L 47/34, H04L 47/32, H04L 47/2483, G06F 13/40, H04L 1/1607, H04L 1/1829, H04L 1/1867

(54) **HEAD-OF-THE-LINE BLOCKING FREE PROTOCOL FOR MULTIPLEXED CONNECTIONS**
BLOCKIERUNGSFREIES HEAD-OF-LINE-PROTOKOLL FÜR MULTIPLEXVERBINDUNGEN
PROTOCOLE LIBRE DE BLOCAGE DE TÊTE DE LIGNE POUR CONNEXIONS MULTIPLEXÉES

(43) Date of publication of application: 02.07.2025
(73) Proprietor: Huawei Technologies Co., Ltd., Shenzhen, Guangdong 518129 (CN)
(72) Inventor: BELKAR, Ben-Shahar, 80992 Munich (DE); GANOR, David, 80992 Munich (DE); COHEN, Reuven, 80992 Munich (DE); GERON, Amit, 80992 Munich (DE)
(74) Representative: Roth, Sebastian
(86) International application number: PCT/EP2022/075681
(87) International publication number: WO 2024/056179

(56) References cited:
- US-A1- 2021 119 930
- US-A1- 2022 085 916

## Description

### TECHNICAL FIELD

The present disclosure relates to a sender and a receiver for respectively sending and receiving packets of messages from multiple flows multiplexed onto a connection between the receiver and the sender. For instance, the connection between the receiver and the sender can be a remote direct memory access (RDMA) connection. The disclosure provides a protocol for sending and receiving packets on such a multiplexed connection, wherein the protocol is head-of-the-line (HOL) blocking free.

### BACKGROUND

RDMA is a technology that is widely used in modern datacenters and computer clusters for low-latency and high-bandwidth networking. RDMA is based on offloading memory operations from a core processing unit (CPU) to a RDMA network interface card (RNIC), which directly accesses a memory. This offload saves CPU time, so that the CPU is free to perform other tasks. The RDMA protocol introduces a real zero copy transmission, wherein user buffers are copied directly to the network without any copies on the way.

The software-layer of the RDMA protocol uses so-called "verbs" to perform various RDMA operations, which are then transformed to work-requests written to queues of the RNIC. Such a work-request is called a work queue element (WQE). RDMA operations are either tagged (one-side WRITE/READ/ATOMIC) or untagged (two-sided SEND/RECEIVE). RDMA operations may have a maximum data length of 2 GB, and are sent over the underlining fabric in multiple packets.

RDMA peers are communicating over queue-pairs (QPs) offering various transport services. The common QP types are: reliable connection (RC), reliable datagram (RD), extended reliable connection (XRC), unreliable datagram (UD); and unreliable connection (UC).

Different companies also have proprietary QP types, which allow multiplexing different destinations or applications for a higher reliable service scale. For instance, scalable reliable datagram (SRD) allows application multiplexing as a reliable datagram service, and dynamic connection (DC) or dynamically connected transport (DCT) allows destination multiplexing as a reliable connection service per destination.

US 2021119930 A1 discloses a reliable transport architecture.

US 2022085916 A1 discloses scalable protocol-agnostic reliable transport.

### SUMMARY

Multiplexed connections - such as RDMA RD QP type - may suffer from a limitation that reduces the performance drastically. In particular, the multiplexed connections may suffer from so-called HOL blocking. HOL blocking occurs when packets are held up in a queue by a blocked packet. For example, HOL blocking occurs, if there is a single queue of packets waiting to be transmitted, and the packet at the head of the queue (line) cannot move forward due to a congestion or due to an inability to process that packet, even if other packets behind that packet could move forward. HOL blocking makes, for example, the above-mentioned RDMA RD QP type a service, which is not implemented in the industry.

Therefore, an objective of this disclosure is to provide an improved transport protocol for multiplexing multiple logical connections into a single physical connection, i.e., for a multiplexed connection. Another objective is that the transport protocol is reliable and avoids the HOL blocking issue. Another objective is that an order is maintained for each of multiple flows multiplexed onto the multiplexed connection.

In this context, "reliable transport" means that a message, which includes one or more packets, is guaranteed to be exchanged exactly once. Multiplexing multiple logical connections means that all messages to a specific destination node are managed and exchanged using a single connection. Multiple destinations means that each message includes its own destination information, unlike for instance for RDMA RC operations, in which a QP context holds such information and all messages go to the same destination.

These and other objectives are achieved by the solutions of disclosure as described in the enclosed independent claims. Advantageous implementations are described in the dependent claims.

A first aspect of this disclosure provides a receiver for receiving packets of messages from multiple flows multiplexed onto a connection between the receiver and a sender; wherein each packet indicates at least the flow to which it belongs and its packet sequence number (PSN), and wherein an initial packet of each message indicates at least a total number of packets of that message. The receiver is configured to receive, from the sender, a first received packet that is an initial packet of a first message of a first flow; discard the first received packet, if the first message cannot be processed by the receiver; receive, from the sender, a second received packet; and discard the second received packet under each one of the following conditions: the second received packet is of the first message; the second received packet is of a second message and belongs to the first flow; the second received packet is of a third message and does not belong to the first flow, and the PSN of the second received packet is not equal to the sum of the PSN of the first received packet plus the total number of packets of the first message plus the total number of packets of any message that belongs to any flow and that was discarded after discarding the first received packet.

Due to the conditions, under which the second received packet is disregarded by the receiver of the first aspect, the sending of the packets on the (multiplexed) connection between the sender and the receiver, is HOL blocking free. The first received packet, even though it cannot be processed, and the second received packet, do not hold up further packets that could move forward. Thus, an improved and reliable transport protocol for the multiplexed connection is provided.

In an implementation form of the first aspect, the receiver is further configured to maintain flow status information indicating one or more blocked flows of the multiple flows; and discard the second received packet under the condition that the second received packet belongs to a second flow that is a blocked flow according to the flow status information.

The flow status information allows the receiver to track blocked flows, and also to provide this information to the sender. For example, a list containing the first discarded message per blocked flow can be provided to the sender. The flow status information can then be derived by the sender from this list, optionally based on its local data structures. This is beneficial for the HOL blocking free protocol.

In an implementation form of the first aspect, if the first message cannot be processed by the receiver, the receiver is further configured to modify the flow status information to indicate that the first flow is a blocked flow.

Thus, the receiver can update the information indicating blocked flows, and the updated information can be shared with the sender.

In an implementation form of the first aspect, the receiver is further configured to maintain PSN information which indicates the PSN of an expected packet, which is expected to be received next from the sender; discard the second received packet under the condition that the PSN of the second received packet is not equal to the PSN of the expected packet as indicated by the PSN information; and not discard the second received packet under the condition that the second received packet belongs to a third flow that has a status, according to the flow status information, which indicates that the third flow is not blocked, and if the PSN of the second received packet is equal to the PSN of the expected packet as indicated by the PSN information, and if the third message can be processed by the receiver.

This allows an order of messages for each of multiple flows multiplexed onto the multiplexed connection to be maintained.

In an implementation form of the first aspect, the receiver is further configured to, if the first message cannot be processed by the receiver, increase the PSN of the expected packet by the total number of packets of the first message plus the total number of packets of any second message that belongs to the first flow and that was discarded after discarding the first received packet.

Generally, the receiver is configured to increase the PSN of the expected packet for every received initial packet of any message that belongs to a blocked flow. This supports the HOL blocking free protocol.

In an implementation form of the first aspect, each message is associated with a message sequence number (MSN), and the receiver is further configured to maintain MSN information which indicates the MSN of an expected message, which is expected to be processed next; and increase the MSN indicated by the MSN information by one, if the first message cannot be processed.

In an implementation form of the first aspect, the receiver is further configured to increase the MSN indicated by the MSN information by one for each second message that belongs to the first flow and that was discarded after discarding the first received packet.

The tracking and updating of the MSN information at the receiver supports the HOL blocking free protocol, and supports maintaining an order of all flows.

In an implementation form of the first aspect, the receiver is further configured to increase the MSN indicated by the MSN information by one, if the second received packet is the last packet of a message and belongs to the third flow.

In an implementation form of the first aspect, the receiver is further configured to send a first not-acknowledge (NACK) packet to the sender, if the first message cannot be processed by the receiver; wherein the first NACK packet includes the PSN information and an indication that the first message cannot be processed by the receiver.

Thus, the sender can accordingly adapt, to avoid HOL blocking.

In an implementation form of the first aspect, the receiver is further configured to send a second NACK packet to the sender, if the second received packet is discarded and if the second received packet is of the second message or of the third message; wherein the second NACK packet includes the PSN information and an indication that the first message cannot be processed by the receiver.

In an implementation form of the first aspect, the first NACK packet and the second NACK packet include the MSN of the first message that cannot be processed by the receiver.

In an implementation form of the first aspect, the first NACK packet and the second NACK packet include an MSN list comprising, for each blocked flow, the MSN of the first blocked message of said blocked flow; or the first NACK packet and the second NACK packet include a PSN list comprising, for each blocked flow, the PSN of the initial packet of the first blocked message of said blocked flow.

In an implementation form of the first aspect, the receiver is further configured to send an acknowledge (ACK) packet to the sender, if the second received packet is not discarded; wherein the ACK message includes the PSN of the second received packet, the MSN of the message the second received packet belongs to, and the MSN list comprising, for each blocked flow, the MSN of the first blocked message of said blocked flow.

In an implementation form of the first aspect, the receiver is further configured to receive, from the sender, a third received packet of a fourth message; discard the third received packet in case of a predetermined failure condition and modify the flow status information of the flow to which the fourth message belongs to indicate that this flow is a blocked flow; send a third NACK packet to sender, if the third received packet is discarded; and hold the PSN of the third received packet and/or the MSN of the fourth message.

The failure condition may be a page fault. The NACK packet may be a RNR message. This disclosure supports blocking of a flow for any packet received (not only the initial packet of a message). This may be achieved by identifying either or both the MSN and the PSN of the received packet that caused the flow to be blocked. The expected PSN may be incremented according to the number of remaining packets in the message, and the MSN may be incremented by 1.

In an implementation form of the first aspect, the third NACK packet includes the PSN of the third packet and/or the MSN of the fourth message.

In an implementation form of the first aspect, the connection between the receiver and the sender is a RDMA connection and/or is a RD connection.

Thus, the reliable transport protocol of this disclosure is compatible with RD RDMA.

A second aspect of this disclosure provides a sender sending packets of messages on multiple flows multiplexed onto a connection between the sender and a receiver; wherein each packet indicates at least the flow to which it belongs and its PSN, and an initial packet of each message indicates at least a total number of packets of that message. The sender is configured to send, to the receiver, a first sent packet that is an initial packet of a first message on a first flow; receive, from the receiver, a NACK packet that includes PSN information which indicates a PSN of an expected packet, which is expected to be received next at the receiver, and an indication that the first message cannot be processed by the receiver; abort sending any further packet of the first message; and send, to the receiver, a second sent packet that does not belong to the first flow, wherein the PSN of the second sent packet is equal to the sum of the PSN of the first sent packet plus the total number of packets of the first message plus the total number of packets of any second message that belongs to the first flow and that was sent to the receiver after the first sent packet.

Due to the aborting of sending packets of the first message, and then sending of the second sent packet, the sending of the packets on the (multiplexed) connection between the sender and the receiver, can be HOL blocking free. Thus, an improved and reliable transport protocol for the multiplexed connection is provided.

In an implementation form of the second aspect, the NACK packet includes an MSN list comprising, for each blocked flow, the MSN of the first message that cannot be processed by the receiver or is discarded by the receiver, and the sender is further configured to skip sending any first transmission of a packet that belongs to a flow, on which any message that cannot be processed by the receiver is sent.

In an implementation form of the second aspect, the sender is further configured to maintain send sequence number (SSN) information which indicates a MSN of a next message to be sent; and send the second sent packet, and associate the second message with a MSN as indicated by the SSN information.

In an implementation form of the second aspect, the sender is further configured to associate the second message with the MSN of the third message, if the third message was planned to be sent before the second message but was skipped.

A third aspect of this disclosure provides a method for receiving packets of messages from multiple flows multiplexed onto a connection between a receiver and a sender; wherein each packet indicates at least the flow to which it belongs and its packet sequence number, PSN, and wherein an initial packet of each message indicates at least a total number of packets of that message. The method comprises receiving, from the sender, a first received packet that is an initial packet of a first message of a first flow; discarding the first received packet, if the first message cannot be processed by the receiver; receiving, from the sender, a second received packet; and discarding the second received packet under each one of the following conditions: the second received packet is of the first message; the second received packet is of a second message and belongs to the first flow; the second received packet is of a third message and does not belong to the first flow, and the PSN of the second received packet is not equal to the sum of the PSN of the first received packet plus the total number of packets of the first message plus the total number of packets of any message that belongs to any flow and that was discarded after discarding the first received packet.

The method of the third aspect may have implementation forms, which correspond to the implementation forms of the receiver of the first aspect. The method of the third aspect and its implementation forms achieves the same advantages as the receiver of the first aspect and its corresponding implementation forms.

A fourth aspect of this disclosure provides a method for sending packets of messages on multiple flows multiplexed onto a connection between a receiver and a sender; wherein each packet indicates at least the flow to which it belongs and its PSN, and an initial packet of each message indicates at least a total number of packets of that message. The method comprises sending, to the receiver, a first sent packet that is an initial packet of a first message on a first flow; receiving, from the receiver a NACK, packet that includes PSN information which indicates a PSN of an expected packet, which is expected to be received next at the receiver, and an indication that the first message cannot be processed by the receiver; aborting sending any further packet of the first message; and sending, to the receiver, a second sent packet that does not belong to the first flow, wherein the PSN of the second sent packet is equal to the sum of the PSN of the first sent packet plus the total number of packets of the first message plus the total number of packets of any second message that belongs to the first flow and that was sent to the receiver after the first sent packet.

The method of the fourth aspect may have implementation forms, which correspond to the implementation forms of the sender of the second aspect. The method of the fourth aspect and its implementation forms achieves the same advantages as the sender of the second aspect and its corresponding implementation forms.

A fifths aspect of this disclosure provides a computer program comprising instructions which, when the program is executed by a computer, cause the computer to perform the method according to the third aspect or fourth aspect.

A sixth aspect of this disclosure provides a non-transitory storage medium storing executable program code which, when executed by a processor, causes the method according to the third or fourth aspect to be performed.

According to the above, the disclosure provides a reliable transport protocol that is HOL blocking free. The receiver may maintain a database of blocked MSNs and blocked flows. When a flow becomes blocked, the MSN of the message that caused the blocking may be added to the database, and the flow may be marked as blocked. The list of blocked MSNs may be carried in each NACK or ACK packet sent back to the sender. The receiver may set its flow status information, MSN information, and PSN information, such that the next message received in-order from a flow that is not blocked is accepted. When the sender receives a blocked MSN for the first time, it may mark the flow corresponding with the SSN information as blocked, and it may increment the SSN according to the SSN information, as if it was completed normally. The sender may remember for each message (e.g., WQE) corresponding to a specific SSN, whether it was already transmitted and whether it is resumed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- FIG. 1: shows a sender and a receiver according to this disclosure for respectively sending and receiving packets of messages from multiple flows multiplexed on a connection between the sender and the received.
- FIG. 2: shows an example of accepting a message in the presence of a blocked flow at a receiver according to this disclosure.
- FIG. 3: shows re-transmitting a packet of a blocked flow by a sender according to this disclosure.
- FIG. 4: shows skipping a message of a blocked flow at a sender according to this disclosure.
- FIG. 5: shows a method for receiving packets according to this disclosure.
- FIG. 6: shows a method for sending packets according to this disclosure.

### DETAILED DESCRIPTION OF EMBODIMENTS

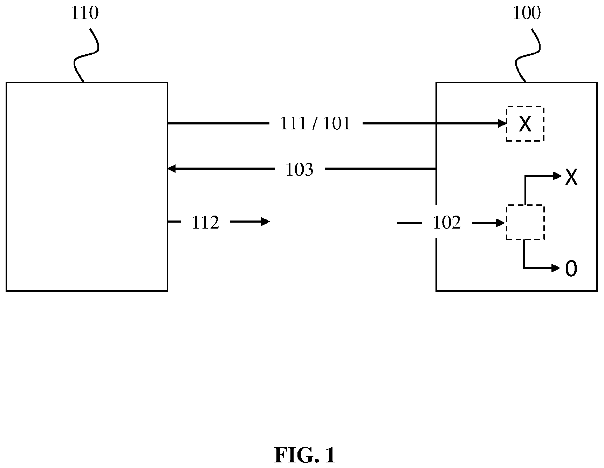

FIG. 1 shows a receiver 100 according to this disclosure, and a sender 110 according to this disclosure. The receiver 100 is configured to receive packets of messages from multiple flows multiplexed onto a connection between the receiver 100 and the sender 110. The sender 110 is accordingly configured to send packets of messages on multiple flows multiplexed onto the connection. The connection between the receiver 100 and the sender 110 may be a RDMA connection and/or may a RD connection, for instance, may be a RDMA RD connection using a RDMA RD QP type. Accordingly, the receiver 100 may be a RDMA receiver, and may also be referred to as "target", and the sender 110 may be a RDMA sender, and may also be referred to as "initiator".

Generally, each packet that is sent over the multiplexed connection indicates at least the flow, to which it belongs, and the PSN of the packet. This may be indicated in a header of the packet. Moreover, each message may comprise one or more packets, usually multiple packets. An initial packet of each message indicates at least a total number of packets of that message. This total number may be indicated in a header of the initial packet of the message. The initial packet of the message may indicate additional information regarding the message it belongs to.

As shown in FIG. 1, the receiver 100 is configured to receive, from the sender 110, a first received packet 101, which is an initial packet of a first message of a first flow. Accordingly, the sender 110 is configured to send, to the receiver 100, a first sent packet 111. In the shown case, the first sent packet 111 and the first received packet 101 are the same packet.

The receiver 100 is further configured to discard the first packet 111, if the first message cannot be processed by the receiver 100. For instance, it can happen that the first message cannot be processed temporarily by the receiver. In this case, the receiver 100 may send a NACK packet 103 to the sender 110. The NACK packet 103 may, however, be also sent by or via another entity. Accordingly, the sender 110 is configured to receive the NACK packet 103, for instance, from the receiver 100. The NACK packet 103 received by the sender 110 includes PSN information, which indicates a PSN of an expected packet, which is expected to be received next at the receiver 100. Further, the NACK packet 103 received by the sender 110 includes an indication that the first message cannot be processed by the receiver 100.

The sender 110 is, upon receiving the NACK packet 103, configured to abort sending any further packet of the first message, since it knows that the first message cannot be processed by the receiver 100. Further, the sender 110 is configured to send, to the receiver 100, a second sent packet 112 that does not belong to the first flow, to which the first sent packet 111 and the first message belong, since the first flow may be blocked at the receiver 100. The sender 110 is configured to send the second sent packet 112 having a PSN that is equal to the sum of the PSN of the first sent packet 111 plus the total number of packets of the first message plus the total number of packets of any second message that belongs to the first flow and that was sent to the receiver after the first sent packet 111.

The receiver 100 is configured to receive a second received packet 102. The second received packet 102 may be the same as the second sent packet 112, but not necessarily sol. For instance, the sender 110 could have sent other packets after sending the first sent packet 111 and before receiving the NACK packet 103. In this case, the second received packet 102 may not be the same as the second sent packet 112. It can also be that packets get lost between the sender 110 and the receiver 100, so that the second sent packet 112 does not arrive at the receiver 100, but that another packet arrives at the receiver 100 as the second received packet 101.

The receiver 100 may therefore determine whether to discard or not discard the second received packet 102. The receiver 100 is configured to discard the second received packet 102 (indicated by X) under each one of the following conditions. (1) The second received packet 102 is of the first message. This is, because the first message cannot be processed by the receiver 100. (2) The second received packet 102 is of a second message and belongs to the first flow. This is, because the first flow may be considered blocked at the receiver 100. (3) The second received packet 102 is of a third message and does not belong to the first flow, and the PSN of the second received packet 102 is not equal to the sum of the PSN of the first received packet 101 plus the total number of packets of the first message plus the total number of packets of any second message that belongs to the first flow and that was discarded after discarding the first received packet 101. In this case, notably, the second received packet 102 is not the same as the second sent packet 112 (different PSN), and the second received packet 102 is not the packet that is expected at the receiver 100.

The receiver 100 may further maintain flow status information, which indicates one or more blocked flows of the multiple flows. That is, the receiver 100 may maintain information on which flows are blocked. If a flow is blocked, the receiver 100 may discard received packets that belong to this flow. For instance, the receiver 100 may discard the second received packet 102 under the condition that the second received packet 102 belongs to a second flow that is a blocked flow according to the flow status information.

The receiver 100 may be further configured to not discard the second received packet 102 (as indicated by 0) under the condition that the second received packet 102 is of a third message and does not belong to the first flow or any other blocked flow, and the PSN of the second received packet 102 is equal to the sum of the PSN of the first received packet 101 plus the total number of packets of the first message plus the total number of packets of any second message that belongs to the first flow and that was discarded after discarding the first received packet 101. For instance, as in FIG. 1 the first received packet 101 is the same as the first sent packet 111, the second received packet 102 is the same as the second sent packet 112 in this case.

In the above way, the sender 110 and the receiver 100, which are configured to operate according to the protocol of sending, receiving, and discarding packets, enable a HOL blocking free transport of packets over the multiplexed connection between the sender and the receiver.

The sender 110 and the receiver 100 may each comprise a processor or processing circuitry (not shown) configured to perform, conduct or initiate the various operations of the sender 110 and the receiver 100 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The sender 110 and the receiver 100 may each further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the sender 110 and the receiver 100 to be performed. In one embodiment, the processing circuitry comprises one or more processors and a non-transitory memory connected to the one or more processors. The non-transitory memory may carry executable program code which, when executed by the one or more processors, causes the sender 110 and the receiver 100 to perform, conduct or initiate the operations or methods described herein.

This protocol proposed by this disclosure may extend multiplexed connections such as RD connections, to support multiple, as in RC, in-flight messages. Any received message at the receiver 100, which at least temporarily cannot be processed at the receiver 100, may be delayed by the NACK message 103, which may be a receiver not ready (RNR) message. The RNR message affects only the RNR-causing flow at the sender 110, which allows to avoid HOL blocking. The order of the messages of the RNR-causing flow can be preserved, however, by using the proposed protocol.

Notably, in case of the sender 110 and receiver 100 being RDMA initiator and RDMA target, such a RNR message can be triggered either by the initial packet of a SEND operation performed by the sender 110, or by last packet of a WRITE-with-Immediate operation performed by the sender 110. For example, in InfiniBand (IB) or in RDMA over Converged Ethernet (RoCE), the initial packet of a WRITE-with-Immediate operation does not include any indication that the last packet will carry immediate data that will consume a RQ WQE.

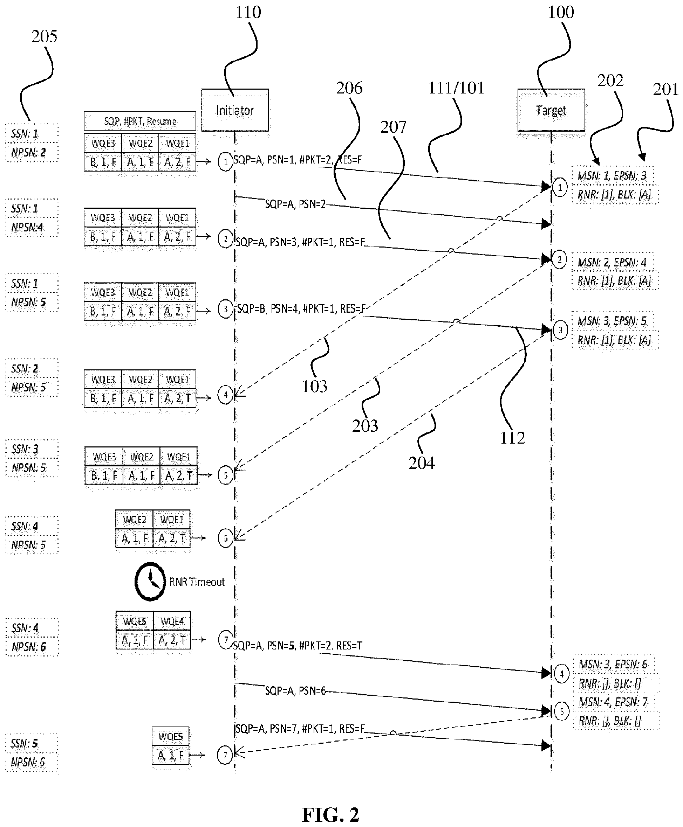

A shown in FIG. 2, the receiver 100 according to this disclosure may be further configured to maintain PSN information 201, which indicates the PSN of an expected packet (ESPN), which is expected to be received next from the sender 110. Further, each message may be associated with a MSN, and the receiver 100 may be further configured to maintain MSN information 202, which indicates the MSN of an expected message, which is expected to be processed next. Likewise, the sender 110 may be further configured to maintain SSN information 205, which indicates a MSN of a next message to be sent to the receiver 100.

The PSN information 201 and the SSN information 205 and/or the MSN information 202 may be used for synchronization between the sender 110 and the receiver 100. The receiver 100 may, for instance, increment the MSN indicated by the MSN information 202 for each message (e.g., WQE) completed (in-order). The receiver 100 may also increase the MSN indicated by the MSN information 202 by one, if the first message cannot be processed. That is, a message of a flow that triggers an RNR message (and leads to a blocking of this flow), and all following messages of the blocked flow may be "counted" as completed by increasing the MSN.

Further, if the first message cannot be processed by the receiver 100, the receiver 100 may increase the PSN of the expected packet by the total number of packets of the first message plus the total number of packets of any second message that belongs to the first flow and that was discarded after discarding the first received packet 101. That is the PSN of the expected packet, the EPSN, may be "skipped" according to number of remaining packets of a blocked message or flow. For example, in case of RDMA, if a WRITE-with-Immediate WQE that triggers a RNR message (by its last packet), the EPSN may be updated by +1.

Notably, for RDMA, a WQE may include a "Started" 1bit flag to indicate which WQEs were already transmitted and which can be "skipped". For instance, the 1bit flag may be '1' when its initial packet is transmitted, and the 1bit flag may be '0' when a WQE is suspended.

The receiver 100 may be further configured to send an ACK packet to the sender 100, if the second received packet 102 is not discarded. The ACK message may include the PSN of the second received packet 102, the MSN of the message the second received packet 102 belongs to, and the MSN list comprising, for each blocked flow, the MSN of the first blocked message of said blocked flow. The receiver 100 may also send one or more NACK messages to the sender 110, wherein any NACK message may include an MSN list comprising, for each blocked flow, the MSN of the first blocked message of said blocked flow. Alternatively, any NACK message may include a PSN list comprising, for each blocked flow, the PSN of the initial packet of the first blocked message of said blocked flow. That is, any ACK or NACK packet (which may also serve as RNR message) may include the PSN, the MSN, and/or a list of "blocked MSNs".

In case of RDMA, the sender 110 may retransmit an initial packet of a message (WQE) of a blocked flow only, if the 1bit flag of the WQE is '1' (TRUE). Thereby, the sender 110 may make sure that the receiver 100 updates the EPSN correctly. Otherwise, the WQE may be skipped. Further, the sender 110, when resuming the WQE that caused the RNR message, may be configured to resume a SEND or resume a WRITE-with-Immediate. In the former case, the entire WQE may be retransmitted and only the initial packet may have a "Resume"='1' indication. In the latter case, only the last packet may be retransmitted, and may include a "Resume"='1' indication.

FIG. 2 illustrates an example according to this disclosure of a message being completed with a previous blocked message. FIG. 2 shows that a first received packet 101 (same as the first sent packet 111) of a first message from a flow A gets blocked at the receiver 100. The receiver 100 accordingly sends the NACK packet 103 to the sender 110. Also another packet 206 of the same message is disregarded at the receiver 100, as this is one of the conditions mentioned above to disregard a second received packet 102. Then, a further packet 207 from flow A arrives at the receiver 100, but is also skipped at the receiver 100 because flow A is currently blocked. That is, the packet 207 is discarded according to one of the conditions mentioned above, under which a second received packet 102 is discarded at the received 100. A further NACK packet 203 is sent to the sender 110. Then, a further packet 112 (corresponding to the second sent packet 112 in FIG. 1) from a flow B is accepted by the receiver 100. Accordingly, an ACK packet 204 is sent to the sender 110. The sender 110 may retry the blocked messages (here exemplarily WQE1, WQE2) after a timeout.

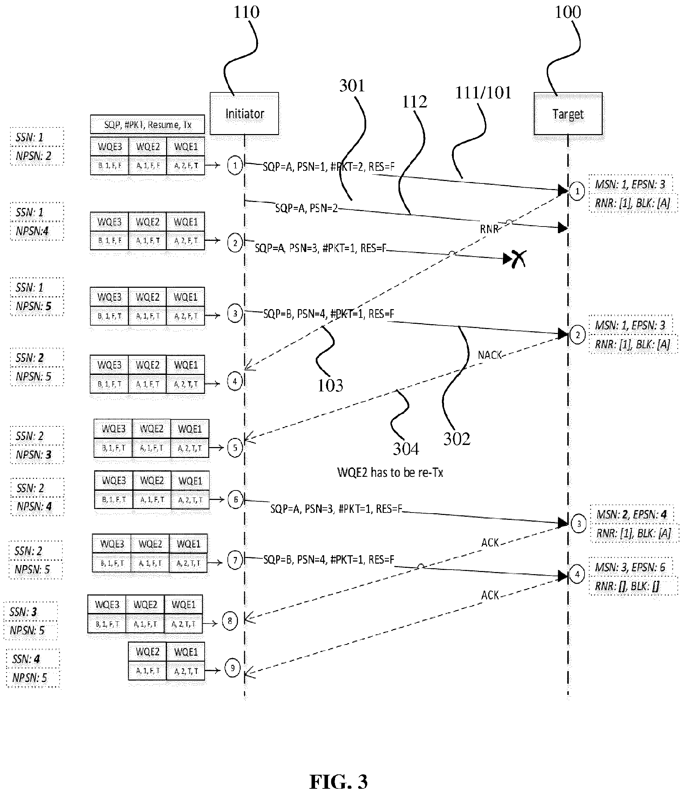

FIG. 3 illustration an example of overcoming packet loss in presence of a blocked flow. FIG. 3 shows that a first received packet 101 of a first message is discarded, wherein the first received packet 101 is the first sent packet 111, and flow A to which the first message belongs gets blocked. A NACK packet 103 is sent to the sender 110. Also another packet 301 of the same message is disregarded at the receiver 100, as this is one of the conditions mentioned above to disregard a second received packet 102. Then, a further packet 112 of a second message from flow A is lost, wherein this packet could be the second sent packet 112 shown in FIG. 1. Then, when a further packet 302 of a third message from a flow B arrives at the receiver 100, it cannot be accepted by the receiver 100, because its PSN is larger than the EPSN. Thus, it does not correspond to the second sent packet 112, which is the expected packet at the received 100. Accordingly, another NACK packet 304 (including the blocked MSN list) is sent back to the sender 110. When the sender 110 receives the NACK packet 304, the sender 110 may retransmit the second message although it belongs to a blocked flow A, since it was already transmitted before.

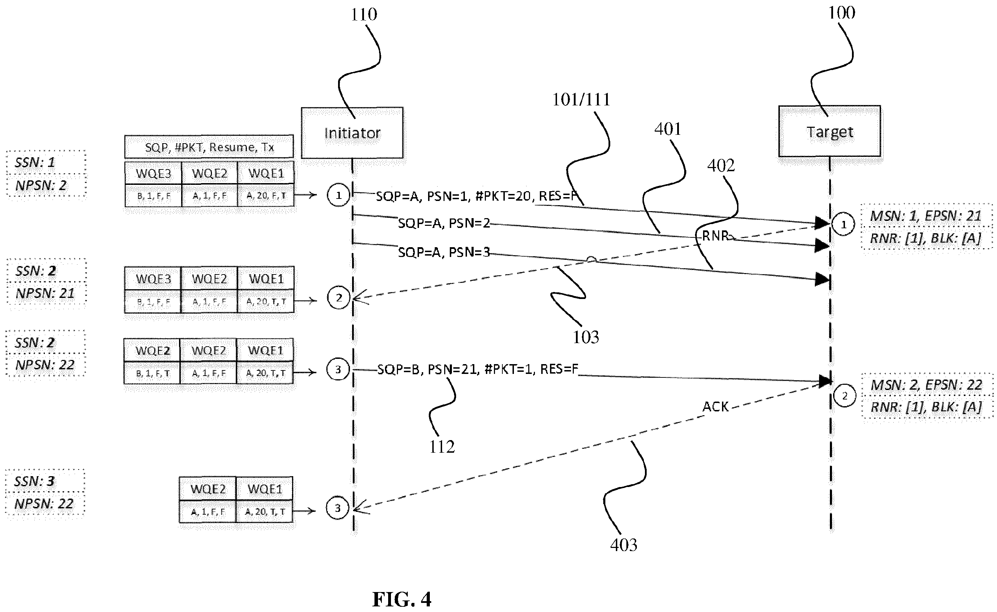

FIG. 4 shows an example of aborting a message and skipping a new message. FIG. 4 shows particularly that a blocked message can be aborted without having to complete its transmission, and that a message belonging to a blocked flow that was not yet transmitted can be skipped. As shown in FIG. 4, first, the sender 110 transmits the first three packets 111, 401, 402 (out of 20 packets) of a first message, wherein the initial packet 111 correspond to the first received packet 101 at the receiver 100. Then, the first message is blocked by the receiver 100 when the initial packet 101 is received. The second and third packets 401, 402 of the first message are considered duplicates by the receiver 100, because it already adjusted the EPSN to be the PSN of the initial packet of the next message. When the sender 110 receives the RNR message (NACK packet 103) containing SSN=1 in the list of blocked MSNs, the sender 110 aborts the transmission of the first message, sets the next PSN (NSPN) to be the PSN after the (not transmitted) last packet of the aborted message, and increments its SSN 205, and marks the flow as blocked. Then, the second message of flow A is skipped, because flow A is blocked and it was not yet transmitted. Then, an initial packet 112 of a third message of flow B is transmitted with the NPSN, and it corresponds with SSN=2, which would have been assigned to the second message, if it would be transmitted before flow A was blocked. This initial packet corresponds to the second sent packet 112 of FIG. 1 and is accepted by the receiver 100. Accordingly, an ACK packet 403 is sent to the sender 110.

In the following, some optional embodiments and alternative implementations are described.

For example, in case of any different RDMA implementation (iWARP, OmniPath, etc.) is used, then the packet that carries the immediate data for WRITE-with-Immediate operation will trigger the RNR. If SEND-with-Immediate is divided into a separate packet then the packet that carries the immediate data will trigger the RNR and we'll handle it like WRITE-with-Immediate operation.

Optionally, the retransmission of packets or messages after RNR could be using a no operation (NOP) packet with the number of packets and message number to be skipped. Alternatively, only a header could be sent with no payload of all the missing packets. Alternatively, a single packet header may be used to indicate the packet range either on the header or inside the payload.

Optionally, if multiple messages are dropped and need to be retransmitted, the above procedure can be used with the indication of how many messages needs to be skipped and not just the number of packets (PSN).

Optionally, in some scenarios, such as page fault, the RNR can be triggered by any packet of any message. To better handle such scenarios, the receiver 100 may hold and optionally report the PSN of the RNR-causing packet. This may prevents duplicate message execution (if PSN is held by the receiver 100). This may avoids unnecessary retransmissions (if PSN is reported by the receiver 100 and held by the sender 110). If the PSN is only held by the receiver 100, but not reported, the sender 110 might retransmit the entire message. The receiver 100 can calculate the offset of the message to be executed. Packets below the offset can be discarded to prevent duplicate execution. If the PSN is also reported to the sender 110, the sender 110 may resume the message from the RNR-causing offset.

Optionally, the solution of this disclosure can work correctly also if the PSN is carried instead of the MSN to report blocked messages, since the PSN can be directly translated into the MSN. However, the MSN is preferred to simplify implementations.

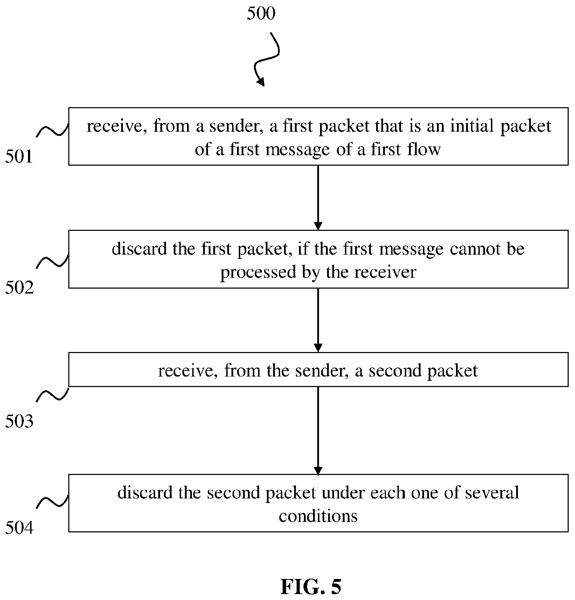

FIG. 5 shows a method 500 for receiving packets of messages from multiple flows multiplexed onto a connection between a receiver 100 and a sender 110, according to this disclosure. The method 500 may be performed by the receiver 100. Each packet indicates at least the flow to which it belongs and its PSN and wherein an initial packet of each message indicates at least a total number of packets of that message.

The method 500 comprises a step 501 of receiving, from the sender 110, a first received packet 101 that is an initial packet of a first message of a first flow. The method 500 further comprises a step 502 of discarding the first received packet 101, if the first message cannot be processed by the receiver 100. Then, the method 500 comprises a step 503 of receiving, from the sender 110, a second received packet 102. The method 500 further comprises a step 504 of discarding the second received packet 102 under each one of the following conditions: the second received packet 102 is of the first message, the second received packet 102 is of a second message and belongs to the first flow; the second received packet 102 is of a third message and does not belong to the first flow, and the PSN of the second received packet 102 is not equal to the sum of the PSN of the first received packet 101 plus the total number of packets of the first message plus the total number of packets of any second message that belongs to the first flow and that was discarded after discarding the first received packet 101.

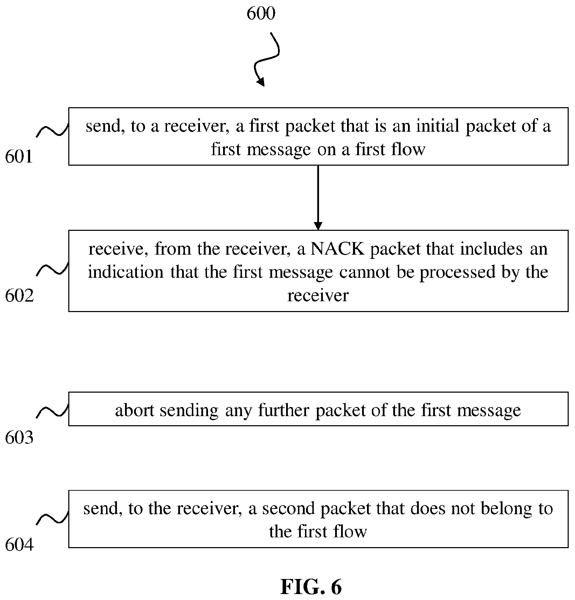

FIG. 6 shows a method 600 for sending packets of messages on multiple flows multiplexed onto a connection between a receiver 100 and a sender 110, according to this disclosure. The method 600 may be performed by the sender 110. Each packet indicates at least the flow to which it belongs and its PSN, and an initial packet of each message indicates at least a total number of packets of that message.

The method 600 comprises a step 601 of sending, to the receiver 100, a first sent packet 111 that is an initial packet of a first message on a first flow. Then, the method 600 comprises a step 602 of receiving, from the receiver 100, a NACK packet 103 that includes PSN information which indicates a PSN of an expected packet, which is expected to be received next at the receiver 100, and an indication that the first message cannot be processed by the receiver 100. The method 600 further comprises a step 603 of aborting sending any further packet of the first message, and a step 604 of sending, to the receiver 100 100, a second sent packet 112 that does not belong to the first flow, wherein the PSN of the second sent packet 112 is equal to the sum of the PSN of the first sent packet 111 plus the total number of packets of the first message plus the total number of packets of any second message that belongs to the first flow and that was sent to the receiver after the first sent packet 111.

The main differences of the solutions of this disclosure to conventional solutions are as follows. RD is limited to single outstanding message per logical connection, and single outstanding message per physical connection. RD uses a special RESYNC opcode to synchronize PSN and MSN between initiator and target after the initiator receives the RNR signal. No data can be sent until RESYNC operation is completed, which requires at least one additional round trip time (RTT). SRD does not maintain order between messages of the same flow, and is limited to single packet message of a limited number of opcodes. DC must connect and disconnect before and after switching between flows.

The present disclosure has been described in conjunction with various embodiments as examples as well as implementations. In the claims as well as in the description the word "comprising" does not exclude other elements or steps and the indefinite article "a" or "an" does not exclude a plurality. A single element or other unit may fulfill the functions of several entities or items recited in the claims.

## Claims

1. A receiver (100) for receiving packets of messages from multiple flows multiplexed onto a connection between the receiver (100) and a sender (110);
wherein each packet indicates at least the flow to which it belongs and its packet sequence number, PSN, and wherein an initial packet of each message indicates at least a total number of packets of that message;
wherein the receiver (100) is configured to:
receive, from the sender (110), a first received packet (101) that is an initial packet of a first message of a first flow;
discard the first received packet (101), if the first message cannot be processed by the receiver (100);
receive, from the sender (110), a second received packet (102); and
discard the second received packet (102) under each one of the following conditions:
- the second received packet (102) is of the first message;
- the second received packet (102) is of a second message and belongs to the first flow;
- the second received packet (102) is of a third message and does not belong to the first flow, and the PSN of the second received packet (102) is not equal to the sum of the PSN of the first received packet (101) plus the total number of packets of the first message plus the total number of packets of any message that belongs to any flow and that was discarded after discarding the first received packet (101).

2. The receiver (100) according to claim 1, further configured to:
maintain flow status information indicating one or more blocked flows of the multiple flows; and
discard the second received packet (102) under the condition that the second received packet (102) belongs to a second flow that is a blocked flow according to the flow status information.

3. The receiver (100) according to claim 2, wherein if the first message cannot be processed by the receiver (100), the receiver (100) is further configured to modify the flow status information to indicate that the first flow is a blocked flow.

4. The receiver (100) according to one of the claims 1 to 3, further configured to:
maintain PSN information (201) which indicates the PSN of an expected packet, which is expected to be received next from the sender (110);
discard the second received packet (102) under the condition that the PSN of the second received packet (102) is not equal to the PSN of the expected packet as indicated by the PSN information (201); and
not discard the second received packet (102) under the condition that the second received packet (102) belongs to a third flow that has a status, according to the flow status information (201), which indicates that the third flow is not blocked, and if the PSN of the second received packet (102) is equal to the PSN of the expected packet as indicated by the PSN information (201), and if the third message can be processed by the receiver (100).

5. The receiver (100) according to claim 4, further configured to, if the first message cannot be processed by the receiver (100):
increase the PSN of the expected packet by the total number of packets of the first message plus the total number of packets of any second message that belongs to the first flow and that was discarded after discarding the first received packet (101).

6. The receiver (100) according to one of the claims 1 to 5, wherein each message is associated with a message sequence number, MSN, and the receiver (100) is further configured to:
maintain MSN information (202) which indicates the MSN of an expected message, which is expected to be processed next; and
increase the MSN indicated by the MSN information (202) by one, if the first message cannot be processed.

7. The receiver (100) according to claim 6, further configured to increase the MSN indicated by the MSN information (202) by one for each second message that belongs to the first flow and that was discarded after discarding the first received packet (101).

8. The receiver (100) according to one of the claims 5 to 7, further configured to
increase the MSN indicated by the MSN information (202) by one, if the second received packet (102) is the last packet of a message and belongs to the third flow.

9. The receiver (100) according to one of the claims 4 to 8, further configured to:
send a first not-acknowledge, NACK, packet (103) to the sender (110), if the first message cannot be processed by the receiver (100);
wherein the first NACK packet (103) includes the PSN information (201) and an indication that the first message cannot be processed by the receiver (100).

10. A sender (110) sending packets of messages on multiple flows multiplexed onto a connection between the sender and a receiver (100);
wherein each packet indicates at least the flow to which it belongs and its packet sequence number, PSN, and an initial packet of each message indicates at least a total number of packets of that message,
wherein the sender (110) is configured to:
send, to the receiver (100), a first sent packet (101) that is an initial packet of a first message on a first flow;
receive, from the receiver (100), a not-acknowledge, NACK, packet (103) that includes PSN information (201) which indicates a PSN of an expected packet, which is expected to be received next at the receiver (100), and an indication that the first message cannot be processed by the receiver (100);
abort sending any further packet of the first message; and
send, to the receiver (100), a second sent packet (112) that does not belong to the first flow, wherein the PSN of the second sent packet (112) is equal to the sum of the PSN of the first sent packet (111) plus the total number of packets of the first message plus the total number of packets of any second message that belongs to the first flow and that was sent to the receiver after the first sent packet (111).

11. The sender (110) according to claim 10, wherein the NACK packet (103) includes an MSN list comprising, for each blocked flow, the MSN of the first message that cannot be processed by the receiver or is discarded by the receiver (100), and the sender (110) is further configured to:
skip sending any first transmission of a packet that belongs to a flow, on which any message that cannot be processed by the receiver (100) is sent.

12. The sender (110) according to one of the claims 10 or 11, further configured to:
maintain send sequence number, SSN, information (205) which indicates a MSN of a next message to be sent; and
send the second sent packet (112), and associate the second message with a MSN as indicated by the SSN information (205).

13. Method (500) for receiving packets of messages from multiple flows multiplexed onto a connection between a receiver (100) and a sender (110);
wherein each packet indicates at least the flow to which it belongs and its packet sequence number, PSN, and wherein an initial packet of each message indicates at least a total number of packets of that message;
wherein the method (500) comprises:
receiving (501), from the sender (110), a first received packet (101) that is an initial packet of a first message of a first flow;
discarding (502) the first received packet (101), if the first message cannot be processed by the receiver (100);
receiving (503), from the sender (110), a second received packet (102); and
discarding (504) the second received packet (102) under each one of the following conditions:
- the second received packet (102) is of the first message;
- the second received packet (102) is of a second message and belongs to the first flow;
- the second received packet (102) is of a third message and does not belong to the first flow, and the PSN of the second received packet (102) is not equal to the sum of the PSN of the first received packet (101) plus the total number of packets of the first message plus the total number of packets of any message that belongs to any flow and that was discarded after discarding the first received packet (101).

14. Method (600) for sending packets of messages on multiple flows multiplexed onto a connection between a receiver (100) and a sender (110);
wherein each packet indicates at least the flow to which it belongs and its packet sequence number, PSN, and an initial packet of each message indicates at least a total number of packets of that message,
wherein the method (600) comprises:
sending (601), to the receiver (100), a first sent packet (111) that is an initial packet of a first message on a first flow;
receiving (602), from the receiver (100), a not-acknowledge, NACK, packet (103) that includes PSN information (201) which indicates a PSN of an expected packet, which is expected to be received next at the receiver (100), and an indication that the first message cannot be processed by the receiver (100);
aborting (603) sending any further packet of the first message; and
sending (604), to the receiver (100), a second sent packet (112) that does not belong to the first flow, wherein the PSN of the second sent packet (112) is equal to the sum of the PSN of the first sent packet (111) plus the total number of packets of the first message plus the total number of packets of any second message that belongs to the first flow and that was sent to the receiver after the first sent packet (111).

15. Computer program comprising instructions which, when the program is executed by a computer, cause the computer to perform the method (500, 600) according to claim 13 or 14.

## Patentansprüche

1. Empfänger (100) zum Empfangen von Paketen von Nachrichten aus mehreren Flüssen, die auf eine Verbindung zwischen dem Empfänger (100) und einem Sender (110) gemultiplext sind;
wobei jedes Paket mindestens den Fluss, zu dem es gehört, und seine Paketsequenznummer, PSN, angibt und wobei ein Anfangspaket jeder Nachricht mindestens eine Gesamtzahl von Paketen dieser Nachricht angibt;
wobei der Empfänger (100) zu Folgendem konfiguriert ist:
Empfangen, von dem Sender (110), eines ersten empfangenen Pakets (101), das ein Anfangspaket einer ersten Nachricht eines ersten Flusses ist;
Verwerfen des ersten empfangenen Pakets (101), wenn die erste Nachricht durch den Empfänger (100) nicht verarbeitet werden kann;
Empfangen, von dem Sender (110), eines zweiten empfangenen Pakets (102); und
Verwerfen des zweiten empfangenen Pakets (102) unter jeder der folgenden Bedingungen:
- das zweite empfangene Paket (102) ist von der ersten Nachricht;
- das zweite empfangene Paket (102) ist von einer zweiten Nachricht und gehört zu dem ersten Fluss;
- das zweite empfangene Paket (102) ist von einer dritten Nachricht und gehört nicht zu dem ersten Fluss und die PSN des zweiten empfangenen Pakets (102) ist nicht gleich der Summe aus der PSN des ersten empfangenen Pakets (101) plus der Gesamtzahl von Paketen der ersten Nachricht plus der Gesamtzahl von Paketen einer beliebigen Nachricht, die zu einem beliebigen Fluss gehört und die nach dem Verwerfen des ersten empfangenen Pakets (101) verworfen wurde.

2. Empfänger (100) nach Anspruch 1, der ferner zu Folgendem konfiguriert ist:
Aufrechterhalten von Flussstatusinformationen, die einen oder mehrere blockierte Flüsse der mehreren Flüsse angeben; und
Verwerfen des zweiten empfangenen Pakets (102) unter der Bedingung, dass das zweite empfangene Paket (102) zu einem zweiten Fluss, der gemäß den Flussstatusinformationen blockiert ist, gehört.

3. Empfänger (100) nach Anspruch 2, wobei, falls die erste Nachricht durch den Empfänger (100) nicht verarbeitet werden kann, der Empfänger (100) ferner dazu konfiguriert ist, die Flussstatusinformationen so zu ändern, dass sie angeben, dass der erste Fluss ein blockierter Fluss ist.

4. Empfänger (100) nach einem der Ansprüche 1 bis 3, der ferner zu Folgendem konfiguriert ist:
Aufrechterhalten von PSN-Informationen (201), welche die PSN eines erwarteten Pakets, das voraussichtlich als nächstes von dem Sender (110) empfangen wird, angeben;
Verwerfen des zweiten empfangenen Pakets (102) unter der Bedingung, dass die PSN des zweiten empfangenen Pakets (102) nicht gleich der PSN des erwarteten Pakets ist, wie in den PSN-Informationen (201) angegeben wird; und
Nichtverwerfen des zweiten empfangenen Pakets (102) unter der Bedingung, dass das zweite empfangene Paket (102) zu einem dritten Fluss gehört, der einen Status aufweist, gemäß den Flussstatusinformationen (201), die angeben, dass der dritte Fluss nicht blockiert ist, und falls die PSN des zweiten empfangenen Pakets (102) gleich der PSN des erwarteten Pakets ist, wie durch die PSN-Informationen (201) angegeben wird, und falls die dritte Nachricht durch den Empfänger (100) verarbeitet werden kann.

5. Empfänger (100) nach Anspruch 4, der ferner zu Folgendem konfiguriert ist, falls die erste Nachricht durch den Empfänger (100) nicht verarbeitet werden kann:
Erhöhen der PSN des erwarteten Pakets um die Gesamtzahl von Paketen der ersten Nachricht plus die Gesamtzahl von Paketen einer beliebigen zweiten Nachricht, die zu dem ersten Fluss gehört und die nach dem Verwerfen des ersten empfangenen Pakets (101) verworfen wurde.

6. Empfänger (100) nach einem der Ansprüche 1 bis 5, wobei jede Nachricht mit einer Nachrichtensequenznummer, MSN, verknüpft ist und der Empfänger (100) ferner zu Folgendem konfiguriert ist:
Aufrechterhalten von MSN-Informationen (202), welche die MSN einer erwarteten Nachricht, die voraussichtlich als nächstes zu verarbeiten ist, angeben; und
Erhöhen der MSN, die durch die MSN-Informationen (202) angegeben wird, um eins, falls die erste Nachricht nicht verarbeitet werden kann.

7. Empfänger (100) nach Anspruch 6, der ferner dazu konfiguriert ist, die MSN, die durch die MSN-Informationen (202) angegeben wird, für jede zweite Nachricht, die zu dem ersten Fluss gehört und die nach dem Verwerfen des ersten empfangenen Pakets (101) verworfen wurde, um eins zu erhöhen.

8. Empfänger (100) nach einem der Ansprüche 5 bis 7, der ferner zu Folgendem konfiguriert ist:
Erhöhen der MSN, die durch die MSN-Informationen (202) angegeben wird, um eins, falls das zweite empfangene Paket (102) das letzte Paket einer Nachricht ist und zu dem dritten Fluss gehört.

9. Empfänger (100) nach einem der Ansprüche 4 bis 8, der ferner zu Folgendem konfiguriert ist:
Senden eines ersten Nichtbestätigungspakets, NACK-Pakets (103), an den Sender (110), falls die erste Nachricht durch den Empfänger (100) nicht verarbeitet werden kann;
wobei das erste NACK-Paket (103) die PSN-Informationen (201) und eine Angabe, dass die erste Nachricht durch den Empfänger (100) nicht verarbeitet werden kann, beinhaltet.

10. Sender (110), der Pakete von Nachrichten auf mehreren Flüssen, die auf eine Verbindung zwischen dem Sender und einem Empfänger (100) gemultiplext sind, sendet;
wobei jedes Paket mindestens den Fluss, zu dem es gehört, und seine Paketsequenznummer, PSN, angibt und ein Anfangspaket jeder Nachricht mindestens eine Gesamtzahl von Paketen dieser Nachricht angibt,
wobei der Sender (110) zu Folgendem konfiguriert ist:
Senden, an den Empfänger (100), eines ersten gesendeten Pakets (101), das ein Anfangspaket einer ersten Nachricht in einem ersten Fluss ist;
Empfangen, von dem Empfänger (100), eines Nichtbestätigungspakets, NACK-Pakets (103), das PSN-Informationen (201), die eine PSN eines erwarteten Pakets angeben, das voraussichtlich als nächstes bei dem Empfänger (100) empfangen wird, und eine Angabe, dass die erste Nachricht durch den Empfänger (100) nicht verarbeitet werden kann, beinhaltet;
Abbrechen des Sendens eines beliebigen weiteren Pakets der ersten Nachricht; und
Senden, an den Empfänger (100), eines zweiten gesendeten Pakets (112), das nicht zu dem ersten Fluss gehört, wobei die PSN des zweiten gesendeten Pakets (112) gleich der Summe der PSN des ersten gesendeten Pakets (111) plus der Gesamtzahl von Paketen der ersten Nachricht plus der Gesamtzahl von Paketen einer beliebigen zweiten Nachricht ist, die zu dem ersten Fluss gehört und die nach dem ersten gesendeten Paket (111) an den Empfänger gesendet wurde.

11. Sender (110) nach Anspruch 10, wobei das NACK-Paket (103) eine MSN-Liste beinhaltet, die für jeden blockierten Fluss die MSN der ersten Nachricht, die durch den Empfänger nicht verarbeitet werden kann oder durch den Empfänger (100) verworfen wird, umfasst und der Sender (110) ferner zu Folgendem konfiguriert ist:
Überspringen des Sendens einer beliebigen ersten Übertragung eines Pakets, das zu einem Fluss gehört, auf dem eine beliebige Nachricht, die durch den Empfänger (100) nicht verarbeitet werden kann, gesendet wird.

12. Sender (110) nach einem der Ansprüche 10 oder 11, der ferner zu Folgendem konfiguriert ist:
Aufrechterhalten von Sendesequenznummerinformationen, SSN-Informationen (205), die eine MSN einer nächsten zu sendenden Nachricht angeben; und
Senden des zweiten gesendeten Pakets (112) und Verknüpfen der zweiten Nachricht mit einer MSN, wie durch die SSN-Informationen (205) angegeben wird.

13. Verfahren (500) zum Empfangen von Paketen von Nachrichten aus mehreren Flüssen, die auf eine Verbindung zwischen einem Empfänger (100) und einem Sender (110) gemultiplext sind;
wobei jedes Paket mindestens den Fluss, zu dem es gehört, und seine Paketsequenznummer, PSN, angibt und wobei ein Anfangspaket jeder Nachricht mindestens eine Gesamtzahl von Paketen dieser Nachricht angibt;
wobei das Verfahren (500) Folgendes umfasst:
Empfangen (501), von dem Sender (110), eines ersten empfangenen Pakets (101), das ein Anfangspaket einer ersten Nachricht eines ersten Flusses ist;
Verwerfen (502) des ersten empfangenen Pakets (101), wenn die erste Nachricht durch den Empfänger (100) nicht verarbeitet werden kann;
Empfangen (503), von dem Sender (110), eines zweiten empfangenen Pakets (102); und
Verwerfen (504) des zweiten empfangenen Pakets (102) unter jeder der folgenden Bedingungen:
- das zweite empfangene Paket (102) ist von der ersten Nachricht;
- das zweite empfangene Paket (102) ist von einer zweiten Nachricht und gehört zu dem ersten Fluss;
- das zweite empfangene Paket (102) ist von einer dritten Nachricht und gehört nicht zu dem ersten Fluss und die PSN des zweiten empfangenen Pakets (102) ist nicht gleich der Summe aus der PSN des ersten empfangenen Pakets (101) plus der Gesamtzahl von Paketen der ersten Nachricht plus der Gesamtzahl von Paketen einer beliebigen Nachricht, die zu einem beliebigen Fluss gehört und die nach dem Verwerfen des ersten empfangenen Pakets (101) verworfen wurde.

14. Verfahren (600) zum Senden von Paketen von Nachrichten auf mehreren Flüssen, die auf eine Verbindung zwischen einem Empfänger (100) und einem Sender (110) gemultiplext sind;
wobei jedes Paket mindestens den Fluss, zu dem es gehört, und seine Paketsequenznummer, PSN, angibt und ein Anfangspaket jeder Nachricht mindestens eine Gesamtzahl von Paketen dieser Nachricht angibt,
wobei das Verfahren (600) Folgendes umfasst:
Senden (601), an den Empfänger (100), eines ersten gesendeten Pakets (111), das ein Anfangspaket einer ersten Nachricht in einem ersten Fluss ist;
Empfangen (602), von dem Empfänger (100), eines Nichtbestätigungspakets, NACK-Pakets (103), das PSN-Informationen (201), die eine PSN eines erwarteten Pakets angeben, das voraussichtlich als nächstes bei dem Empfänger (100) empfangen wird, und eine Angabe, dass die erste Nachricht durch den Empfänger (100) nicht verarbeitet werden kann, beinhaltet;
Abbrechen (603) des Sendens eines beliebigen weiteren Pakets der ersten Nachricht; und
Senden (604), an den Empfänger (100), eines zweiten gesendeten Pakets (112), das nicht zu dem ersten Fluss gehört, wobei die PSN des zweiten gesendeten Pakets (112) gleich der Summe der PSN des ersten gesendeten Pakets (111) plus der Gesamtzahl von Paketen der ersten Nachricht plus der Gesamtzahl von Paketen einer beliebigen zweiten Nachricht ist, die zu dem ersten Fluss gehört und die nach dem ersten gesendeten Paket (111) an den Empfänger gesendet wurde.

15. Computerprogramm, umfassend Anweisungen, die, wenn das Programm durch einen Computer ausgeführt wird, den Computer dazu veranlassen, das Verfahren (500, 600) nach Anspruch 13 oder 14 durchzuführen.

## Revendications

1. Récepteur (100) destiné à recevoir des paquets de messages provenant de plusieurs flux multiplexés sur une connexion entre le récepteur (100) et un émetteur (110) ;
dans lequel chaque paquet indique au moins le flux auquel il appartient et son numéro de séquence de paquet, PSN, et dans lequel un paquet initial de chaque message indique au moins un nombre total de paquets de ce message ;
dans lequel le récepteur (100) est configuré pour :
recevoir, à partir de l'émetteur (110), un premier paquet reçu (101) qui est un paquet initial d'un premier message d'un premier flux ;
rejeter le premier paquet reçu (101), si le premier message ne peut pas être traité par le récepteur (100) ;
recevoir, à partir de l'émetteur (110), un second paquet reçu (102) ; et
rejeter le second paquet reçu (102) dans chacune des conditions suivantes :
- le second paquet reçu (102) est du premier message ;
- le second paquet reçu (102) est d'un deuxième message et appartient au premier flux ;
- le second paquet reçu (102) est d'un troisième message et n'appartient pas au premier flux, et le PSN du second paquet reçu (102) n'est pas égal à la somme du PSN du premier paquet reçu (101) plus le nombre total de paquets du premier message plus le nombre total de paquets de tout message qui appartient à un flux quelconque et qui a été rejeté après le rejet du premier paquet reçu (101).

2. Récepteur (100) selon la revendication 1, en outre configuré pour :
maintenir les informations d'état de flux indiquant un ou plusieurs flux bloqués des flux multiples ; et
rejeter le second paquet reçu (102) à condition que le second paquet reçu (102) appartienne à un deuxième flux qui est un flux bloqué selon les informations d'état de flux.

3. Récepteur (100) selon la revendication 2, dans lequel si le premier message ne peut pas être traité par le récepteur (100), le récepteur (100) est en outre configuré pour modifier les informations d'état de flux pour indiquer que le premier flux est un flux bloqué.

4. Récepteur (100) selon l'une des revendications 1 à 3, en outre configuré pour :
maintenir les informations PSN (201) qui indiquent le PSN d'un paquet attendu, qui devrait être reçu ensuite à partir de l'émetteur (110) ;
rejeter le second paquet reçu (102) à condition que le PSN du second paquet reçu (102) ne soit pas égal au PSN du paquet attendu comme indiqué par les informations PSN (201) ; et
ne pas rejeter le second paquet reçu (102) à condition que le second paquet reçu (102) appartienne à un troisième flux qui a un statut, selon les informations de statut de flux (201), qui indique que le troisième flux n'est pas bloqué, et si le PSN du second paquet reçu (102) est égal au PSN du paquet attendu tel qu'indiqué par les informations PSN (201), et si le troisième message peut être traité par le récepteur (100).

5. Récepteur (100) selon la revendication 4, configuré en outre pour, si le premier message ne peut pas être traité par le récepteur (100) :
augmenter le PSN du paquet attendu du nombre total de paquets du premier message plus le nombre total de paquets de tout deuxième message qui appartient au premier flux et qui a été rejeté après le rejet du premier paquet reçu (101).

6. Récepteur (100) selon l'une des revendications 1 à 5, dans lequel chaque message est associé à un numéro de séquence de message, MSN, et le récepteur (100) est en outre configuré pour :
maintenir les informations MSN (202) qui indiquent le MSN d'un message attendu, qui devrait être traité ensuite ; et
augmenter le MSN indiqué par les informations MSN (202) d'une unité, si le premier message ne peut pas être traité.

7. Récepteur (100) selon la revendication 6, configuré en outre pour augmenter le MSN indiqué par les informations MSN (202) d'une unité pour chaque deuxième message qui appartient au premier flux et qui a été rejeté après le rejet du premier paquet reçu (101).

8. Récepteur (100) selon l'une des revendications 5 à 7, en outre configuré pour
augmenter le MSN indiqué par les informations MSN (202) d'une unité, si le second paquet reçu (102) est le dernier paquet d'un message et appartient au troisième flux.

9. Récepteur (100) selon l'une des revendications 4 à 8, en outre configuré pour :
envoyer un premier paquet de non-accusé de réception, NACK (103), à l'émetteur (110), si le premier message ne peut pas être traité par le récepteur (100) ;
dans lequel le premier paquet NACK (103) comporte les informations PSN (201) et une indication que le premier message ne peut pas être traité par le récepteur (100).

10. Émetteur (110) envoyant des paquets de messages sur plusieurs flux multiplexés sur une connexion entre l'émetteur et un récepteur (100) ;
dans lequel chaque paquet indique au moins le flux auquel il appartient et son numéro de séquence de paquet, PSN, et un paquet initial de chaque message indique au moins un nombre total de paquets de ce message,
dans lequel l'émetteur (110) est configuré pour :
envoyer, au récepteur (100), un premier paquet envoyé (101) qui est un paquet initial d'un premier message sur un premier flux ; recevoir, à partir du récepteur (100), un paquet de non-accusé de réception, NACK, (103) qui comporte des informations PSN (201) qui indiquent un PSN d'un paquet attendu, qui devrait être reçu ensuite par le récepteur (100), et une indication que le premier message ne peut pas être traité par le récepteur (100) ; interrompre l'envoi de tout autre paquet du premier message ; et
envoyer, au récepteur (100), un second paquet envoyé (112) qui n'appartient pas au premier flux, dans lequel le PSN du second paquet envoyé (112) est égal à la somme du PSN du premier paquet envoyé (111) plus le nombre total de paquets du premier message plus le nombre total de paquets de tout deuxième message qui appartient au premier flux et qui a été envoyé au récepteur après le premier paquet envoyé (111).

11. Émetteur (110) selon la revendication 10, dans lequel le paquet NACK (103) comporte une liste MSN comprenant, pour chaque flux bloqué, le MSN du premier message qui ne peut pas être traité par le récepteur ou qui est rejeté par le récepteur (100), et l'émetteur (110) est en outre configuré pour :
sauter l'envoi de toute première transmission d'un paquet qui appartient à un flux, sur lequel tout message qui ne peut pas être traité par le récepteur (100) est envoyé.

12. Émetteur (110) selon l'une des revendications 10 ou 11, configuré en outre pour :
maintenir les informations de numéro de séquence d'envoi, SSN, (205) qui indiquent un MSN d'un message suivant à envoyer ; et
envoyer le second paquet envoyé (112), et associer le deuxième message à un MSN comme indiqué par les informations SSN (205).

13. Procédé (500) pour la réception de paquets de messages à partir de multiples flux multiplexés sur une connexion entre un récepteur (100) et un émetteur (110) ;
dans lequel chaque paquet indique au moins le flux auquel il appartient et son numéro de séquence de paquet, PSN, et dans lequel un paquet initial de chaque message indique au moins un nombre total de paquets de ce message ;
dans lequel le procédé (500) comprend :
la réception (501), à partir de l'émetteur (110), d'un premier paquet reçu (101) qui est un paquet initial d'un premier message d'un premier flux ;
le rejet (502) du premier paquet reçu (101), si le premier message ne peut pas être traité par le récepteur (100) ;
la réception (503), à partir de l'émetteur (110), d'un second paquet reçu (102) ; et
le rejet (504) du second paquet reçu (102) dans chacune des conditions suivantes :
- le second paquet reçu (102) est du premier message ;
- le second paquet reçu (102) est d'un deuxième message et appartient au premier flux ;
- le second paquet reçu (102) est d'un troisième message et n'appartient pas au premier flux, et le PSN du second paquet reçu (102) n'est pas égal à la somme du PSN du premier paquet reçu (101) plus le nombre total de paquets du premier message plus le nombre total de paquets de tout message qui appartient à un flux quelconque et qui a été rejeté après le rejet du premier paquet reçu (101).

14. Procédé (600) pour envoyer des paquets de messages sur de multiples flux multiplexés sur une connexion entre un récepteur (100) et un émetteur (110) ;
dans lequel chaque paquet indique au moins le flux auquel il appartient et son numéro de séquence de paquet, PSN, et un paquet initial de chaque message indique au moins un nombre total de paquets de ce message,
dans lequel le procédé (600) comprend :
l'envoi (601), au récepteur (100), d'un premier paquet envoyé (111) qui est un paquet initial d'un premier message sur un premier flux ;
la réception (602), à partir du récepteur (100), d'un paquet de non-accusé de réception, NACK, (103) qui comporte des informations PSN (201) qui indiquent un PSN d'un paquet attendu,
qui devrait être reçu ensuite par le récepteur (100), et une indication que le premier message ne peut pas être traité par le récepteur (100) ;
l'interruption (603) de l'envoi de tout autre paquet du premier message ; et
l'envoi (604), au récepteur (100), d'un second paquet envoyé (112) qui n'appartient pas au premier flux, dans lequel le PSN du second paquet envoyé (112) est égal à la somme du PSN du premier paquet envoyé (111) plus le nombre total de paquets du premier message plus le nombre total de paquets de tout deuxième message qui appartient au premier flux et qui a été envoyé au récepteur après le premier paquet envoyé (111).

15. Programme informatique comprenant des instructions qui, lorsque le programme est exécuté par un ordinateur, amènent l'ordinateur à réaliser le procédé (500, 600) selon la revendication 13 ou 14.
